# EUROPEAN PATENT APPLICATION

(11) **EP 0 664 415 A2**
(43) Date of publication of application: **26.07.1995**
(21) Application number: 94119600.8
(22) Date of filing: 12.12.1994
(51) Int. Cl.: F16J 15/12

(54) **Annular safety gasket for butt joining pipes and the like**

(30) Priority: 14.12.1993 IT TO930267 U
(71) Applicant: Castelli, Sergio, I-10100 Torino (IT)
(72) Inventor: Castelli, Sergio, I-10100 Torino (IT)
(74) Representative: Modiano, Guido, Dr.-Ing.

(57) **Abstract**

The gasket comprises a sheath (10) made of elastomeric material which includes a metallic annular insert (11) which is suitable to absorb the mechanical stresses that tend to make the gasket assume a conical shape. The annular insert (11) is included in the elastomeric sheath (10) preferably by molding in place, and the sheath has annular portions (10a-10b) which are arranged on either sides of the annular insert (11) and have substantially identical outside diameters and different inside diameters, or vice versa.

## Description

The present invention relates to an annular safety gasket for the planar head-to-head connection, or butt joining, of pipes, unions, connectors, and the like, and more particularly to a gasket having the specific characteristics stated in the appended claims.

Planar head-to-head connections between two pipes or between a pipe and a connector, or a rigid hose coupling, currently commonly use annular gaskets made of elastomeric material which are clamped between the two heads of the parts to be joined.

This hermetic coupling method has no drawbacks if the inside and outside diameters of the pipes or, more generally, of the parts to be butt-joined, are substantially identical. In this case both sides of the annular gasket in fact rest on the opposite heads and the gasket deforms correctly, expanding radially inside and outside said parts to be joined.

If instead the diameters of the pipes and the like to be joined are significantly different, so that the region of contact between the facing heads is limited, the elastomeric annular gasket deforms unevenly and may even become arranged at least partially inside the tube that has the largest diameter, irreparably compromising the tightness of the joint.

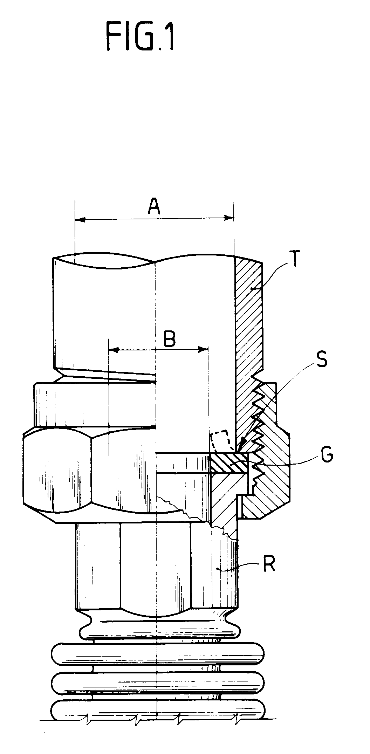

A typical case of this kind is shown in figure 1 of the accompanying drawings, which is a partially sectional view of a connector R having a diameter B and of a pipe T having a diameter A; the connector and the pipe are mutually joined by means of a planar butt joint produced by interposing a known elastomeric annular gasket G.

In view of the significant difference between the diameters A and B, the gasket, which is mainly subjected to shearing stress by the pipe T, tends to become conical around the annular edge S where the stresses concentrate and tends to become arranged axially towards the inside of said pipe T, as shown in dashed lines in the figure.

A principal aim of the present invention is to eliminate this typical drawback of known elastomeric gaskets and is based, for this purpose, on the innovative concept of including in the elastomeric gasket a metal core which, by absorbing the predominant shearing stresses, prevents the conical deformation of the gasket in the typical case described above.

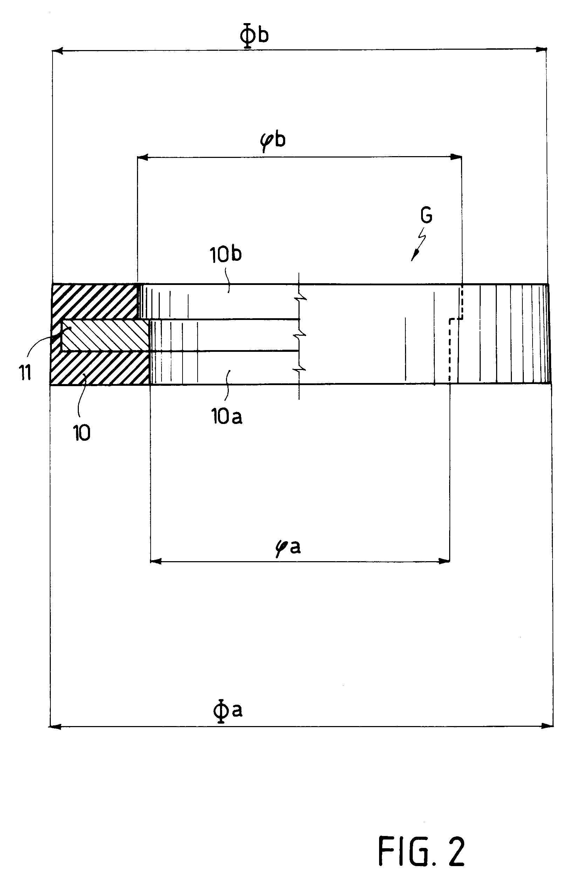

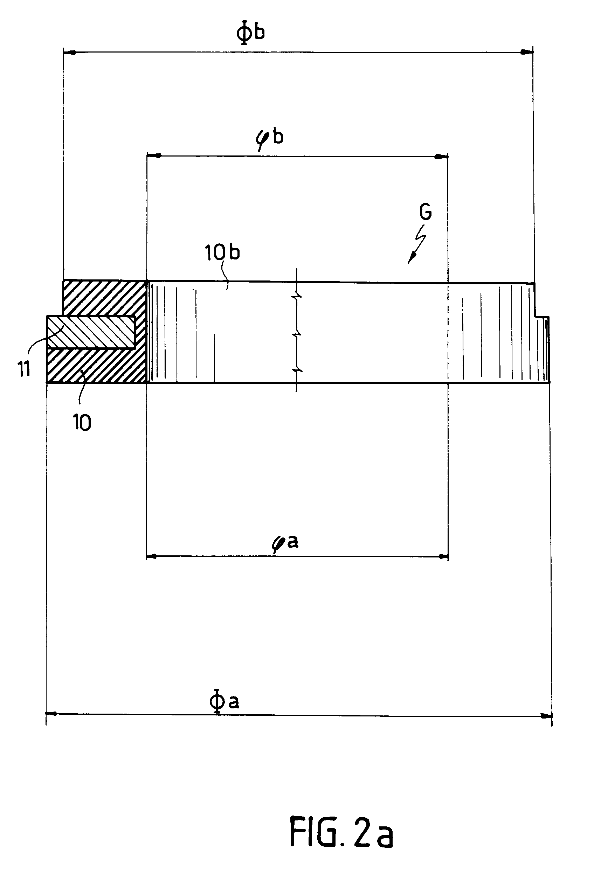

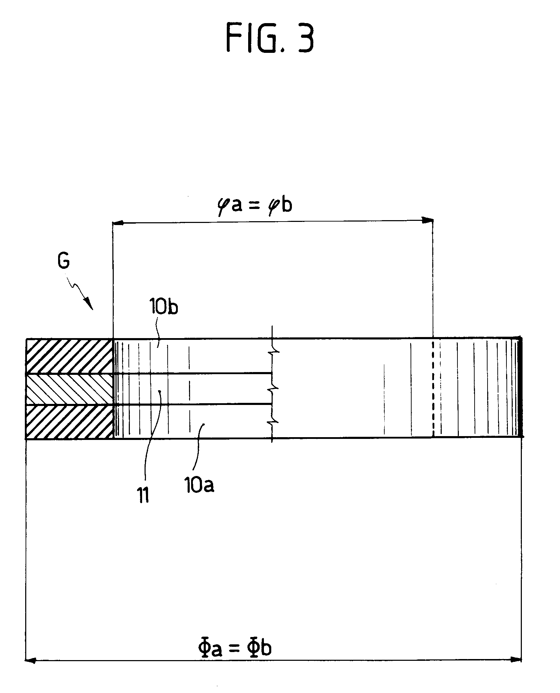

The characteristics of the safety gasket according to the invention are evident from the accompanying figures 2, 2a, and 3, which are enlarged-scale diametrical sectional views of respective embodiments of said gasket that achieve equal utility.

In the embodiment of figure 2, the gasket G comprises a sheath 10 made of elastomeric material, typically natural or synthetic rubber, in which a metallic annular insert 11 is embedded by molding in place. In order to facilitate the placement of the insert 11 in the mold, the two annular portions 10a-10b of the elastomeric sheath, which are arranged on either sides of the insert 11, advantageously have substantially identical respective outside diameters Φa-Φb and different inside diameters φa- φb, and the diameter φa is smaller than the diameter φb and equal to the inside diameter of the annular insert 11. As an alternative, according to the equivalent embodiment of figure 2a, the inside diameters a- b of the annular portions 10a-10b are substantially identical and the outside diameter a of the portion 10a is greater than the outside diameter b of the portion 10b.

In the embodiment of figure 3, in which similar parts are designated by the same reference numeral, the gasket G is obtained by blanking from a sandwich formed by two layers 10a-10b of elastomeric material between which a sheet of metal 11, typically steel, is interposed; said sheets 10a-10b are tightly coupled to said metal sheet by preliminary vulcanization.

The diameters a- b and Φa-Φb of the gasket are identical in this case, owing to the blanking process with which the gasket is obtained.

The effects of the present invention of course include items that achieve equal utility by using the same inventive concept.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Annular safety gasket for the planar head-to-head joining of pipes and the like, characterized in that it comprises a sheath (10) made of elastomeric material which includes a metallic annular insert (11) which is suitable to absorb the mechanical stresses that tend to give said gasket a conical shape.

2. Annular gasket according to claim 1, characterized in that the annular insert (11) is included in the elastomeric sheath (10) by molding in place.

3. Gasket according to claims 1 and 2, characterized in that the annular portions (10a-10b) of the sheath (10) arranged on either sides of the annular insert (11) have substantially equal outside diameters and different inside diameters ( φa< φb).

4. Gasket according to claims 1 and 2, characterized in that the annular portions (10a-10b) of the sheath (10) arranged on either sides of the annular insert (11) have substantially identical inside diameters and different outside diameters (Φa>Φb).

5. Gasket according to claim 1, characterized in that it is obtained by blanking from a sandwich formed by two layers (10a-10b) of elastomeric material between which a sheet (11) of metal, typically steel, is interposed; the layers of elastomeric material being tightly joined to the metal one by preliminary vulcanization.
